**Europäisches Patentamt**

**European Patent Office**

**Office européen des brevets**

(19)

(11) Veröffentlichungsnummer: **0 085 851**
**B1**

(12) **EUROPÄISCHE PATENTSCHRIFT**

(45) Veröffentlichungstag der Patentschrift:
02.07.86

(51) Int. Cl.⁴: **B 62 D 31/00,** B 60 R 5/04

(21) Anmeldenummer: **83100376.9**

(22) Anmeldetag: **18.01.83**

(54) **Kraftfahrzeug mit einer Heckklappe.**

(30) Priorität: **05.02.82 DE 3203940**

(43) Veröffentlichungstag der Anmeldung:
**17.08.83 Patentblatt 83/33**

(45) Bekanntmachung des Hinweises auf die Patenterteilung:
**02.07.86 Patentblatt 86/27**

(84) Benannte Vertragsstaaten:
**DE FR GB IT SE**

(56) Entgegenhaltungen:
**DE-A-2 123 462**
**DE-A-2 635 506**
**FR-A-2 353 417**

(73) Patentinhaber: **Adam Opel Aktiengesellschaft,
Bahnhofsplatz 1 Postfach 1560, D-6090
Rüsselsheim (DE)**

(72) Erfinder: **Zankl, Kurt, Ing., Weingartenstrasse 59,
D-6085 Nauheim (DE)**

(74) Vertreter: **Baumgarten, Jochem, Dipl.- Ing., C/O
Adam Opel Aktiengesellschaft Bahnhofsplatz 1
Postfach 1560, D-6090 Rüsselsheim (DE)**

LIBER, STOCKHOLM 1986

EP 0 085 851 B1

## Beschreibung

Die Erfindung bezieht sich auf ein Kraftfahrzeug mit einer Heckklappe und einer von der Heckklappe bis zur Rückenlehne des Hintersitzes sich erstreckenden, von einer einteiligen Platte gebildeten Laderaumabdeckung, wobei die Platte nahe ihrem vorderen und hinteren Ende mittels Lagerzapfen oder dgl. derart in Lagern gelagert ist, daß sie sowohl von hinten als auch vom Fahrgastraum her anhebbar ist.

Eine solche Laderaumabdeckung ist durch die DE-A- 26 35 506 bekannt geworden. In der Regel ist bei einer solchen Anordnung das hintere Ende der Laderaumabdeckung mittels zweier seitlich angeordneter Schnüre mit der Heckklappe verbunden. Beim Öffnen der Heckklappe wird daher die Laderaumabdeckung an ihrem hinteren Ende ebenfalls mit angehoben, so daß der Laderaum besser zugänglig ist. Die vorderen Lagerzapfen der Laderaumabdeckung sind entweder lose in U-förmigen Aufnahmen gelagert, oder die U-förmigen Aufnahmen haben federnde seitliche Schenkel, deren oberer Abschnitt einen geringeren Abstand als der Durchmesser der Lagerzapfen besitzt. Die Lagerzapfen sind somit in ihrer Lagerung, d.h. in den Aufnahmen so gelagert, daß sie nur unter Überwindung einer geringen Kraft nach oben ausgehoben werden können.

Trotz eines solchen Federklemmlagers, bei dem also die Lagerzapfen nur bei Anwendung einer bestimmten Kraft aus ihren Aufnahmen ausgehoben werden können, kann es vorkommen, daß beim Öffnen, d. h. beim Hochschwenken der Heckklappe die Laderaumabdeckung nicht nur aus ihren hinteren Lagern ausgehoben und nach oben geschwenkt wird, sondern daß auch die vorderen Lagerzapfen aus den Lagern ausgehoben werden. Dies kann insbesondere dann der Fall sein, wenn die Heckklappe sich sehr weit nach oben schwenken läßt und die Laderaumabdeckung nur eine geringe Ausdehnung in Längsrichtung des Fahrzeuges hat. Die Folge des Aushebens der vorderen Lagerzapfen aus ihren Lagern ist die, daß nach Schließen der Heckklappe die Laderaumabdeckung zwar in ihre waagerechte Lage gelangt, jedoch nicht mit ihren vorderen Lagerzapfen in die Lager eingreift. Die Laderaumabdeckung ist somit nicht festgehalten und gibt daher beim Fahren zu Klappergeräuschen Anlaß.

Die FR-A1-2 353 417 hat eine Laderaumabdeckung zum Gegenstand, bei der die Lagerzapfen der vorderen Lager der Platte in seitliche Lageröffnungen eingreifen, aus denen sie entgegen Federwirkung herausbewegt werden können. Die Platte kann dann aus ihrer Stellung herausbewegt werden. Ähnlich verhält es sich mit der Anordnung nach der DE-A -2 123 462. Beide Anordnungen stellen aber nicht eine Laderaumabdeckung dar, von der unsere Erfindung ausgeht. Die Entriegelung der Lagerstelle durch Herausbewegen des Lagerzapfens aus der Lagerbohrung kann nicht vom Fahrgastraum aus erfolgen.

Die Aufgabe der Erfindung besteht darin, eine Laderaumabdeckung zu schaffen, die sich in üblicher Weise beim Öffnen der Heckklappe nach vorne hochschwenken läßt, ohne daß auch im Extremfalle die vorderen Lager ausgehoben werden. Es wird somit immer eine sichere Lage der Laderaumabdeckung nach dem Schließen der Heckklappe gewährleistet. Außerdem soll das Lösen der vorderen Lager und das Hochschwenken der Laderaumabdeckung vom Fahrgastraum her erleichtert werden.

Dies wird erfindungsgemäß dadurch erreicht, daß in oder nahe jedes des vorderen Lager ein das An- bzw. Ausheben der Lagerzapfen verhindernder, durch Federwirkung in einer verriegelten Stellung gehaltener Riegel od. dgl. vorgesehen ist, der eine nach oben gerichtete Handhabe für die Betätigung aufweist und im Lager eine Feder vorgesehen ist, die an der Unterseite des Lagerzapfens mit Vorspannung anliegt.

Die Laderaumabdeckung kann daher nicht ohne weiteres vom Fahrgastraum her angehoben, d. h. nach hinten geschwenkt werden. Es ist vielmehr erforderlich, hierzu zunächst die Riegel aus ihrer verriegelten Stellung zu bewegen, so daß die Platte hochgeschwenkt werden kann. Nach dem Lösen der Verriegelung der Lagerzapfen werden diese so weit hochgedrückt, daß sie nicht mehr vom Riegel erfaßt werden.

Eine vorteilhafte Ausführung ergibt sich dann, wenn der Riegel in einem Lager an einer seitlichen Konsole angeordnet und in Längsrichtung der Lagerzapfen verschieb- oder verschwenkbar angeordnet ist.

Die Erfindung wird nun anhand eines Ausführungsbeispieles näher erläutert.

In der Zeichnung zeigen:

Fig. 1 den hinteren Abschnitt eines Kraftfahrzeuges mit Heckklappe in perspektivischer Ansicht,

Fig. 2 dieselbe Ansicht bei einer anderen Stellung der Laderaumabdeckung,

Fig. 3 eine Seitenansicht der Laderaumabdeckung,

Fig. 4 eine teilweise Draufsicht auf die Laderaumabdeckung,

Fig. 5 einen Schnitt nach Linie V - V in Fig. 3,

Fig. 6 einen Schnitt nach Linie VI - VI in Fig. 3 und

Fig. 7 einen Schnitt durch das vordere Lager ebenfalls gemäß Linie V - V in Fig. 3.

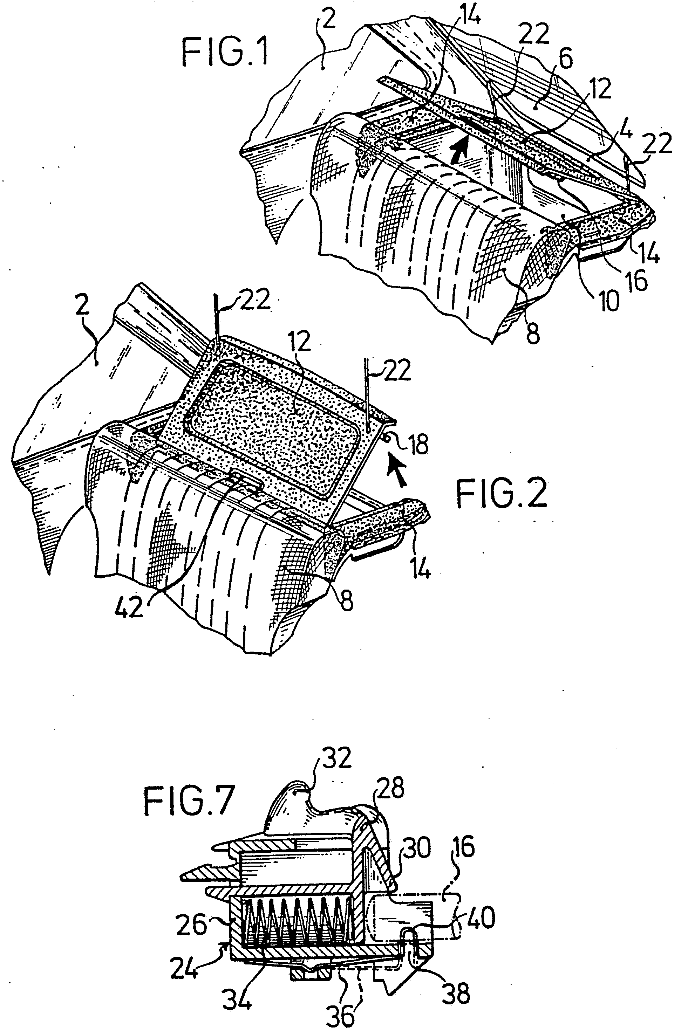

In Fig. 1 und 2 ist das hintere Seitenfenster 2 ersichtlich sowie die Heckklappe 4, in der das Heckfenster 6 sich befindet. Zwischen der Heckklappe 4 und der Rückenlehne 8 des Hintersitzes befindet sich ein Laderaum 10, der durch eine Laderaumabdeckung abgedeckt ist, die von einer Platte 12 gebildet wird. Die Platte 12 erstreckt sich von der Heckklappe 4 bis zu der Rückenlehne 8. Seitlich der Platte 12 befinden sich zwischen dieser und der Seitenwand des Kraftfahrzeuges Konsolen 14.

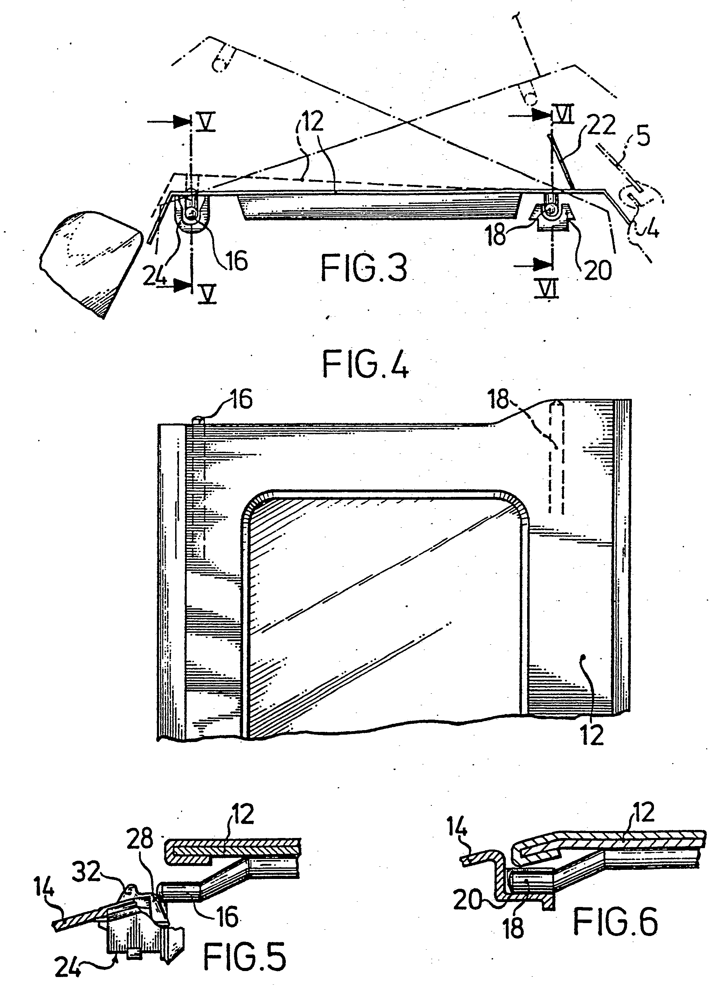

Die Platte 12 ist mit seitlichen Lagerzapfen 16 und 18 versehen, wie am besten aus den Fig. 3 und 4 zu ersehen ist. Die hinteren Lagerzapfen 18 greifen in als Lager ausgebildete U-förmige Aufnahmen 20 ein, wenn die Abdeckung in ihrer geschlossenen Stellung sich befindet. Die Lager 20 befinden sich an den Konsolen 14. In der Nähe der Lagerzapfen 18, also an ihrem hinteren Ende sind an der Platte 12 Schnüre 22 befestigt, deren oberes Ende mit der Heckklappe verbunden ist. Beim Öffnen der Heckklappe wird daher die Platte 12 um ihre vorderen Lager hochgeschwenkt, wie Fig. 2 zeigt.

Die vorderen Lagerzapfen 16 sind in Lagern 24 gelagert. Diese Lager 24 sind nicht wie die hinteren Lager 20 von einfachen U-förmigen Aufnahmen gebildet. Das Lager 24 besteht aus einem Lagergehäuse 26, das ebenfalls an der dem Lagerzapfen 16 zu liegenden Seite eine U-förmige Aufnahme für diesen bildet. Im Gehäuse 26 ist aber auch ein einen Riegel 28 bildender Schieber gelagert bzw. geführt, der mittels einer Nase 30 den Lagerzapfen 16 übergreift, wie dies die Fig. 7 zeigt. Der Riegel 28 hat ferner eine Handhabe 32 und steht unter der Wirkung einer Feder 34. Fig. 7 zeigt die verriegelte Stellung des Lagerzapfens 16. Eine am unteren Ende des Gehäuses 26 angeordnete plattfeder 36 greift mit einer Abbiegung durch eine Gehäuseöffnung 38 hindurch nach oben in die U-förmige Aufnahme für den Lagerzapfen 16 hinein. In der in Fig. 7 gezeichneten Lage ist die durch die Öffnung 38 nach oben greifende Abbiegung 40 der Feder 36 nach unten gedrückt, wie die gestrichelte Lage der Feder 36 dies zeigt. Der Lagerzapfen 16 befindet sich in der in Fig. 7 dargestellten Lage sowohl bei geschlossener Abdeckung als auch bei durch die Heckklappe hochgeschwenkter Abdeckung. Soll nun der Laderaum vom Fahrgastraum zugängig gemacht werden, so wird zunächst der Riegel 28 mittels der Handhabe in Fig. 7 entgegen der Wirkung der Feder 34 nach links bewegt. Sobald die Nase 30 des Riegels 28 das Ende des Lagerzapfens 16 freigibt, wird dieser durch die Abbiegung 40 der Feder 36 nach oben bewegt, und zwar soweit, daß er mit seiner Oberkante über die Nase 30 nach oben gelangt. Somit befindet er sich in einer entriegelten Stellung, obwohl die Platte 12 noch nahe ihrer Geschlossenstellung sich befindet. Diese Lage der Platte 12 ist in Fig. 5 in gestrichelten Linien dargestellt. Die Entriegelung der Lagerzapfen 16 erfolgt natürlich links und rechts, was zweckmäßig gleichzeitig geschieht. Nachdem also nun die Platte 12 mit ihren Lagerzapfen 16 oberhalb der Aufnahme bzw. der Nase 50 des Riegels 28 liegt, kann die Platte nun leicht mit einer Hand in der Mitte, z.B. an einen Handgriff 42, hochgeschwenkt werden, wie dies in Fig. 1 dargestellt ist. Auch in Fig. 3 sind die jeweils hochgeschwenkten Stellungen der Platte 12 in strichpunktierten Linien beispielsweise dargestellt.

## Patentansprüche

1. Kraftfahrzeug mit einer Heckklappe (4) und einer von der Heckklappe bis zur Rückenlehne (8) des Hintersitzes sich erstreckenden, von einer einteiligen Platte (12) gebildeten Laderaumabdeckung, wobei die Platte nahe ihrem vorderen und hinteren Ende mittels Lagerzapfen (16) od. dgl. derart in Lagern (20, 24) gelagert ist, daß sie sowohl von hinten beim Anheben der Heckklappe über Schnüre (22) als auch vom Fahrgastraum her durch manuelle Betätigung anhebbar ist,
dadurch gekennzeichnet,
daß in oder nahe jedes der vorderen Lager (24) ein das An- bzw. Ausheben der Lagerzapfen (16) verhindernder, durch die Wirkung einer ersten Feder (34) in einer verriegelten Stellung gehaltener Riegel (28) od. dgl. vorgesehen ist, der eine nach oben gerichtete Handhabe (32) für die Betätigung aufweist und im Lager (24) eine zweite Feder (36) vorgesehen ist, die an der Unterseite des Lagerzapfens (16) mit Vorspannung anliegt.

2. Kraftfahrzeug nach Anspruch 1, dadurch gekennzeichnet, daß der Riegel (28) in einem Lager (24) an einer seitlichen Konsole (14) angeordnet und in Längsrichtung der Lagerzapfen (16) verschieb- oder verschwenkbar angeordnet ist.

## Claims

1. Motor vehicle with a rear door (4) and a luggage compartment cover formed by a one-piece panel (12) and extending from the rear door to the back rest (8) of the rear seat, the panel being mounted in bearings (20, 24) by means of bearing pins (16) or the like near its front and rear ends in such a way that it can be raised both from the rear by means of cords (22) when the rear door is raised, and from the passenger compartment by manual operation, characterised in that in or near each of the front bearings (24) is provided a catch (28) or the like which prevents lifting or removal of the bearing pins (16) and is held in a locked position by the action of a first spring (34) and which comprises an upwardly extending handle (32) for operation, and in the bearing (24) is provided a second spring (36) which is biassed against the lower side of the bearing pin (16).

2. Motor vehicle according to claim 1, characterised in that the catch (28) is disposed in a bearing (24) on a side mounting pad (14), and is pivotable or slidable in the longitudinal direction of the bearing pins (16).

## Revendications

1. Véhicule automobile avec un hayon arrière (4) et une plage arrière s'étendant du hayon arrière au dossier (8) du siège arrière et se présentant sous la forme d'une tablette (12) en une pièce, la tablette étant, à proximité de ses extrémités avant et arrière, montée au moyen de pivots (16) ou éléments similaires dans des paliers (20, 24) de telle sorte qu'elle puisse être soulevée tant de l'arrière lors du soulèvement du hayon arrière, par l'intermédiaire de cordelettes (22), que depuis l'habitacle, par actionnement à la main, caractérisé par le fait qu'il est prévu, dans ou à proximité de chacun des paliers (24) avant, un verrou (28) ou élément similaire empêchant le soulèvement des pivots (16) et leur sortie des paliers (24), maintenu en position verrouillée par l'action d'un premier ressort (34) et comportant une poignée (32) orientée vers le haut, et qu'il est prévu dans le palier (24) un deuxième ressort (36) qui s'appuie avec précontrainte contre le dessous du pivot (16).

2. Véhicule automobile selon la revendication 1, caractérisé par le fait que le verrou (28) est disposé dans un palier (24) sur une console (14) latérale, et est monté mobile en translation ou en pivotement dans le sens longitudinal du pivot (16).

0 085 851

FIG.1

FIG.2

FIG.7

FIG.3

FIG.4

FIG.5

FIG.6